# EUROPEAN PATENT APPLICATION

(11) **EP 3 672 166 A1**
(43) Date of publication of application: **24.06.2020**
(21) Application number: 17927515.1
(22) Date of filing: 27.09.2017
(51) Int. Cl.: H04L 12/66

(54) **USER EQUIPMENT ACCESS METHOD AND APPARATUS FOR USE WITH R2 DEVICE**

(71) Applicant: Huawei Technologies Co., Ltd., Longgang Shenzhen, Guangdong 518129 (CN)
(72) Inventor: FENG, Bin, Shenzhen Guangdong 518129 (CN); XU, Jing, Shenzhen Guangdong 518129 (CN)
(74) Representative: Pfenning, Meinig & Partner mbB
(86) International application number: PCT/CN2017/103653
(87) International publication number: WO 2019/061070

(57) **Abstract**

This application provides a method and an apparatus for connecting user equipment served by an R2 device, applied to a scenario in which first user equipment in an IMS initiates a call to second user equipment served by the R2 device, where before the call is initiated, the second user equipment is already on a call. The method includes: when detecting that hookflash signaling of the second user equipment is received, playing, by a VG, a dial prompt tone to the R2 device, where the dial prompt tone is used to prompt an operation in which the second user equipment establishes communication with the first user equipment; receiving, by the VG, signaling fed back by the second user equipment based on the dial prompt tone; and controlling and operating a service of the second user equipment based on content of the signaling. According to the method, the VG and the IMS provide a supplementary service to the user equipment served by the R2 device, thereby ensuring that service experience of a user served by the R2 device remains unchanged when the R2 device is connected an IMS network.

## Description

### TECHNICAL FIELD

This application relates to the field of multimedia service technologies, and in particular, to a method and an apparatus for connecting user equipment served by an R2 (Region number two signaling, region number two signaling) device.

### BACKGROUND

In a conventional communication mode, a public switched telephone network (Public Switched Telephone Network, PSTN) plays a dominant role. Before a data network is initially formed, a telephone network bears most services of voice or even data transmission. However, with the rapid development of the Internet technology and the IP voice technology, and due to aging devices in the PSTN and high operation and maintenance costs, operators in various places are planning or are performing network reconstruction. For example, a local switch is withdrawn from the network, so that a user served by the switch is migrated to an IP multimedia subsystem (IP Multimedia Subsystem, IMS).

The IMS is a core of a next generation network, and is oriented to a next generation network architecture of a telecommunications operator that aims to provide mobile and fixed multimedia services. The IMS uses a session initiation protocol (Session Initiation Protocol, SIP) as a session control protocol, so that a requirement of current terminal customers for multimedia services that are more innovative and diversified can be met. The IMS is also an important tool for implementing convergence of mobile and fixed networks, and introducing differentiated services such as triple convergence of voice, data, and video.

In the PSTN, many devices still use R2 channel associated signaling, and therefore, the local switch needs to be withdrawn from the network. When these R2 devices are migrated to the IMS network, a problem is how to inherit voice services of the original network, such as distinctive ringing, calling line identification presentation, and call waiting, to ensure that voice service experience of users served by the R2 devices remains unchanged. Currently, there is no standard and normative description for solving the problem.

### SUMMARY

This application provides a method and an apparatus for connecting user equipment served by an R2 device. In the method, a VG and an IMS cooperate to provide a supplementary service to a user served by the R2 device, and a service that cannot be provided by the R2 device is supplemented into an IMS network, thereby ensuring that service experience of the user served by the R2 device remains unchanged during network exit and migration. This resolves a problem that service experience of the user served by the R2 device needs to remain unchanged when the R2 device that cannot provide the supplementary service is migrated into the IMS network.

According to a first aspect, this application provides a method for connecting user equipment served by an R2 device. The method is used to perform hookflash on a service of second user equipment served by the R2 device, the second user equipment is already on a call before the hookflash, the R2 device is connected to an IP multimedia subsystem IMS by using a voice gateway VG, and the method includes:
when detecting that hookflash signaling of the second user equipment is received, playing, by the VG, a first dial prompt tone to the R2 device; receiving, by the VG, R2 signaling fed back by the second user equipment based on the first dial prompt tone; and sending, by the VG, SIP signaling of a hookflash service to the IMS based on content of the R2 signaling, to supplement, in combination with the IMS, the hookflash service of the second user equipment.

With reference to the first aspect, in an implementation of the first aspect, the hookflash service includes a call waiting service, the first dial prompt tone includes a first service number, the first service number is used to prompt the second user equipment to establish a communication connection to first user equipment in the IMS, and the sending, by the VG, SIP signaling of a hookflash service to the IMS based on content of the R2 signaling includes: if detecting that the R2 signaling includes the first service number, generating, by the VG, a first acknowledgment message, where the first acknowledgment message is used to instruct the IMS to establish a communication connection to the first user equipment; and sending, by the VG, the first acknowledgment message to the IMS, so that the first user equipment in the IMS establishes the communication connection to the second user equipment served by the R2 device, and at the same time, holds the call that the second user equipment is already on.

With reference to the first aspect, in another implementation of the first aspect, the dial prompt tone includes a second service number, the second service number is used to instruct the second user equipment to hang up a call request of the first user equipment, and the sending and the receiving, by the VG, SIP signaling of a hookflash service to the IMS based on content of the R2 signaling includes: if detecting that the R2 signaling includes the second service number, generating, by the VG, a second acknowledgment message, where the second acknowledgment message is used to instruct the IMS to hang up the call request of the first user equipment; sending, by the VG, the second acknowledgment message to the IMS, so that the IMS reject the call request of the first user equipment; and when the call of the first user equipment is hung up, playing, by the VG, a busy tone to the first user equipment.

With reference to the first aspect, in still another implementation of the first aspect, before the playing, by the VG, a first dial prompt tone to the R2 device, the method further includes: receiving, by the VG, a call request from the IMS, where the call request is initiated by the first user equipment through the IMS and is used to request to establish a call with the second user equipment served by the R2 device; and after receiving the call request, detecting, by the VG, a status of the second user equipment, and if the status of the second user equipment is busy, sending a call waiting prompt tone to the second user equipment by using the R2 device, and sending call waiting information and a ring back tone to the IMS.

With reference to the first aspect, in still another implementation of the first aspect, the hookflash signaling is register recall R2 signaling and is used to indicate a series of hookflash services, and the hookflash services include: call hold, call waiting, call transfer, call forwarding, malicious communication identification, a three-party call service, and the like.

With reference to the first aspect, in still another implementation of the first aspect, the detecting, by the VG, that hookflash signaling of the second user equipment is received includes: receiving, by the VG, the hookflash signal from the second network device; sending, by the VG, reinvite signaling to the IMS, where the reinvite signaling is used to instruct the IMS to hold the call that the second network device is already on without hanging up the call; and receiving, by the VG, a third acknowledgment message fed back by the IMS based on the reinvite signaling.

With reference to the first aspect, in still another implementation of the first aspect, the hookflash service includes a three-party call service, and the first dial prompt tone is used to prompt the second user equipment to dial a number of third user equipment; before the VG receives the hookflash signaling of the second user equipment, the method further includes: holding, by the VG, the call that the second network device is already on; and the sending, by the VG, SIP signaling of a hookflash service to the IMS based on content of the R2 signaling includes: establishing, by the VG, a communication connection to the third user equipment based on the number in the R2 signaling; after establishing the communication connection to the third user equipment, maintaining, by the VG, the communication connection between the second user equipment and the third user equipment; playing, by the VG, a second dial prompt tone to the R2 device; receiving, by the VG, R2 signaling fed back by the second user equipment based on the second dial prompt tone; and if the R2 signaling includes a third service number, applying, by the VG, to the IMS for a conference room, and inviting two users who maintain communication connections to the second user equipment to enter the conference room, to establish a three-party call connection.

According to the method provided in this aspect, through R2 line signaling interworking with the R2 device and SIP signaling interworking with the IMS, the VG completes mapping between the SIP signaling and the R2 signaling and call waiting service processing, to provide the call waiting service to user equipment that does not have the call waiting function and that is served by the R2 device, and ensure that service experience of the user served by the R2 device remains unchanged, and at the same time, hold the call line that the second user equipment is already on without hanging up the call line.

According to a second aspect, this application further provides a method for connecting user equipment served by an R2 device. The method is used to perform hookflash on a service of second user equipment served by the R2 device, the second user equipment is already on a call before the hookflash, the R2 device is connected to an IMS by using a VG, and the method includes:
receiving, by the IMS, SIP signaling from the VG, where the signaling is used to notify the IMS that the second user equipment performs a service hookflash operation; receiving, by the IMS, an acknowledgment message from the VG; and performing, by the IMS, a supplementation operation on a hookflash service of the second user equipment based on the acknowledgment message.

With reference to the second aspect, in an implementation of the second aspect, the performing, by the IMS, a supplementation operation on a hookflash service of the second user equipment based on the acknowledgment message includes: if the acknowledgment message is a first acknowledgment message, establishing a communication connection between first user equipment in the IMS and the second user equipment served by the R2 device, and at the same time, holding the call that the second user equipment is already on; or if the acknowledgment message is a second acknowledgment message, hanging up a call request of the first user equipment.

With reference to the second aspect, in another implementation of the second aspect, before the receiving, by the IMS, SIP signaling from the VG, the method further includes: obtaining, by the IMS, a call request from a first user, where the call request is used to request the first user equipment to establish a communication connection to the second user equipment; sending, by the IMS, the call request to the VG; and receiving, by the IMS, call waiting information from the VG.

According to a third aspect, this application further provides a method for connecting user equipment served by an R2 device. The method includes: receiving, by a VG, SIP signaling from an IMS, where the SIP signaling includes a ringing type of a first user; determining, by the VG based on the ringing type, a time interval of ring on and a time interval of ring off; and sending, by the VG, the time intervals to an R2 device associated with a called second user, so that the R2 device plays a ring tone based on the time intervals.

With reference to the third aspect, in an implementation of the third aspect, the method further includes: presetting, by the VG, a correspondence between different ringing types and different time intervals of ring on and different time intervals of ring off; and the determining, by the VG based on the ringing type, a time interval of ring on and a time interval of ring off includes: determining, by the VG based on the ringing type and the correspondence, the time interval of ring on and the time interval of ring off that are corresponding to the ringing type of the first user.

With reference to the third aspect, in another implementation of the third aspect, the SIP signaling further includes a number of the calling first user; and the method further includes: sending, by the VG, the number of the calling first user to the R2 device on a voice channel.

With reference to the third aspect, in still another implementation of the third aspect, the sending, by the VG, the number of the calling first user to the R2 device on a voice channel includes: sending, by the VG, the number of the calling first user to the R2 device on the voice channel in an intermittent period of the first ringing tone of ringing and in a manner of a frequency shift modulation FSK signal or a dual-tone multi-frequency DTMF signal.

According to this aspect, a distinctive ringing service is provided. A distinctive ringing function is provided, by using the VG, for user equipment that does not have the distinctive ringing function and that is served by the R2 device, to keep user service experience unchanged.

According to a fourth aspect, this application provides a method for connecting user equipment served by an R2 device. The method includes: obtaining, by an IMS, a number of a calling first user; determining, by the IMS, a ringing type of the first user based on the number of the calling first user; and sending, by the IMS, the ringing type to the VG in a manner of carrying the ringing type in SIP signaling.

With reference to the fourth aspect, in an implementation of the fourth aspect, before the IMS sends the SIP signaling to the VG, the method further includes: configuring, by the IMS, the ringing type into an alert-info header field of the SIP signaling.

With reference to the fourth aspect, in another implementation of the fourth aspect, the method further includes: obtaining, by the IMS, a correspondence between different numbers and different ringing types; and the determining, by the IMS, a ringing type of the first user based on the number of the calling first user includes: determining, by the IMS, the ringing type of the first user based on the number of the calling first user and the correspondence.

According to a fifth aspect, this application further provides a method for connecting user equipment served by an R2 device. The method includes: when a calling first user completes leaving a voice message, receiving, by a VG, first message waiting indicator information from an IMS, where the first message waiting indicator information is generated by the IMS after the first user completes leaving the voice message. Assembling, by the VG, the first message waiting indicator information into a first FSK signal based on a requirement of a message waiting indicator signal; and sending, by the VG, the first FSK signal to the R2 device on a voice channel established with the R2 device, so that the R2 device transparently transmits the first FSK signal to called second user equipment, and turns on a message waiting indicator of the second user equipment.

With reference to the fifth aspect, in an implementation of the fifth aspect, the receiving, by a VG, first message waiting indicator information from an IMS includes: receiving, by the VG, the first message waiting indicator information sent by the IMS in a manner of carrying the first message waiting indicator information in a preset (notify) field of SIP signaling.

With reference to the fifth aspect, in another implementation of the fifth aspect, the method further includes: when a called second user completes listening to the voice message left by the calling first user, receiving, by the VG, second message waiting indicator information from the IMS, where the second message waiting indicator information is generated by the IMS after the second user completes listening to the voice message; assembling, by the VG, the second message waiting indicator information into a second FSK signal based on the requirement of the message waiting indicator signal; and sending, by the VG, the second FSK signal to the R2 device on the voice channel, so that the R2 device transparently transmits the second FSK signal to the called second user equipment, and turns off the message waiting indicator of the second user equipment.

According to this aspect, the VG provides a message waiting indicator service to the R2 device, to be specific, the VG provides a service function of turning on and turning off the message waiting indicator for the user equipment served by the R2 device. The message waiting indicator service is mainly provided for some R2 devices that do not have a capability of sending message waiting indicator signals.

According to a sixth aspect, this application further provides another method for connecting user equipment served by an R2 device. The method is used for a calling user to initiate a call to a called user, and the method includes: generating, by a VG, a polarity reversal signal when receiving an instruction indicating that the called user picks up a phone; sending, by the VG, the polarity reversal signal to the R2 device associated with the calling user, where the polarity reversal signal is used to instruct calling user equipment served by the R2 device to reverse a polarity and start charging; generating, by a VG, a normal polarity signal when receiving an instruction indicating that the called user hangs up the phone; and sending, by the VG, the normal polarity signal to the R2 device, where the normal polarity signal is used to instruct the calling user equipment served by the R2 device to restore the polarity and stop charging.

With reference to the sixth aspect, in an implementation of the sixth aspect, the generating a polarity reversal signal includes: detecting, by the VG, whether the calling user is a payphone user; and if yes, generating the polarity reversal signal.

According to this aspect, the VG provides a polarity reversal indication for the user equipment served by the R2 device, to implement a polarity reversal charging service function. Especially for some R2 devices that are unaware of types of users served by the R2 device, to be specific, the R2 devices do not know whether the users served by the R2 device are payphone users or common users, the VG can provide polarity reversal signals for the users served by the R2 devices and provide a polarity reversal charging service.

According to a seventh aspect, this application provides an apparatus for connecting user equipment served by an R2 device. The apparatus includes a receiving module, a processing module, and a sending module, and may further include a storage module and the like. The apparatus is configured to implement the methods in the implementations according to the first aspect to the sixth aspect. The apparatus for connecting may be a voice gateway VG device, or may be any device in an IP multimedia subsystem IMS, and is configured to implement mapping between and processing of SIP signaling and R2 signaling in different services.

According to an eighth aspect, this application further provides another apparatus for connecting. The apparatus may include a service logic processing module, an SIP processing module, and an R2 processing module based on function module division. The service logic processing module is configured to trigger, based on hookflash signaling and an SOC number, a hookflash supplementary service procedure, including service functions such as a call waiting service, instructing to play a call waiting prompt tone, connecting or rejecting a new call based on a received SOC number. The SIP processing module is configured to exchange data with an IMS, including adding hookflash event processing, adding ringing based on a call status, sending polarity reversal signaling, presenting calling line identification, sending a message waiting indicator signal, and the like. The R2 processing module is configured to exchange data with an R2 device, including: adding hookflash line signaling detection, adding ringing, and sending polarity reversal line signaling, and the like.

According to a ninth aspect, at a specific hardware implementation layer, this application further provides a device for connecting, for example, a VG device, including a transceiver, a processor, and a memory. The memory stores a program and an instruction, and the processor may execute the program or the instruction stored in the memory, to implement the method for connecting user equipment served by an R2 device in the implementations according to the first aspect, the third aspect, the fifth aspect, and the sixth aspect.

According to a tenth aspect, this application further provides a computer storage medium. The computer storage medium may store a program, and when the program is executed, some or all of the steps in the embodiments of the method for connecting user equipment served by an R2 device that is provided in this application may be implemented.

According to the method and the apparatus for connecting user equipment served by an R2 device that are provided in this application, for the R2 device that cannot provide the supplementary service, after a local switch is withdrawn from a network, the user equipment served by the R2 device can be connected to the IMS network by using a VG hookflash supplementary service, to keep service experience of a user served by the R2 device unchanged. At the same time, after the VG connects the R2 device to the IMS network, the R2 device can share a newly-added service of the IMS network.

### BRIEF DESCRIPTION OF DRAWINGS

To describe the technical solutions in this application more clearly, the following briefly describes the accompanying drawings required for describing the embodiments. Clearly, a person of ordinary skill in the art may derive other drawings from these accompanying drawings without creative efforts.
FIG. 1 is a schematic diagram of migration of an R2 device from a PSTN network to an IMS network according to this application;
FIG. 2a is a flowchart of signaling in a call waiting service according to this application;
FIG. 2b-1 and FIG. 2b-2 are flowcharts of signaling in a three-party call service according to this application;
FIG. 3 is a flowchart of signaling in another call waiting service according to this application;
FIG. 4 is a flowchart of signaling in a distinctive ringing service according to this application;
FIG. 5 is a flowchart of signaling in a message waiting indicator service according to this application;
FIG. 6 is a flowchart of signaling in a polarity reversal charging service according to this application;
FIG. 7 is a schematic structural diagram of a VG according to this application;
FIG. 8 is a schematic structural diagram of another VG according to this application; and
FIG. 9 is a schematic diagram of a system of an IMS network architecture according to this application.

### DESCRIPTION OF EMBODIMENTS

To make a person skilled in the art understand technical solutions in embodiments of this application better, and make the objectives, features, and advantages of the embodiments of this application clearer, the following further describes the technical solutions in the embodiments of this application in detail with reference to the accompanying drawings.

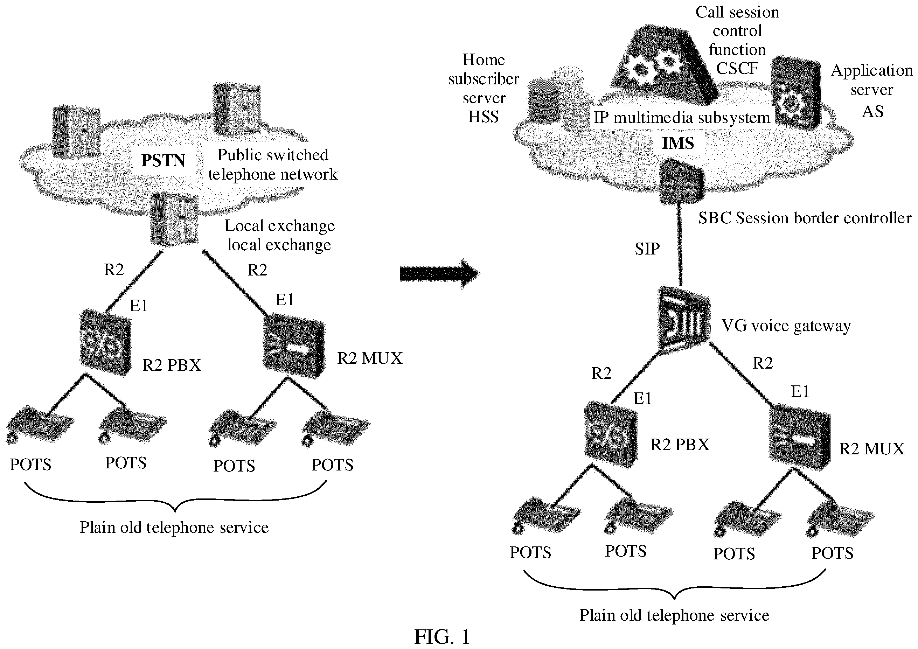

Before the technical solutions in the embodiments of this application are described, an application scenario of the embodiments of this application is first described with reference to the accompanying drawings. FIG. 1 is a schematic diagram of migration of an R2 device from a PSTN network to an IMS network.

The IMS system provides a next generation IP-based mobile network with a multimedia service and platform oriented to packet data packet switching. The IMS is to provide a comprehensive framework of an enhanced IP service, and is a general term for network core layer logic functional entities that control IP multimedia services.

An IMS network includes: a call session control function (Call Session Control Function, CSCF), a home subscriber server (Home Subscriber Server, HSS), a voice over IP (Voice over Internet Protocol, VoIP) access gateway (Access Gateway, AG), a voice gateway (Voice Gateway, VG), an application server (Application Server, AS), a session border controller (Session Border Controller, SBC), a breakout gateway control function, an application server, and the like. The IMS network uses a session initiation protocol (Session Initiation Protocol, SIP) as signaling of call control and service control.

As shown in FIG. 1, a VG is connected to at least one R2 device (R2 device) by using R2 signaling, and each R2 device may be connected to a plurality of phone sets by using a plurality of lines, for example, an analog telephone service (Plain Old Telephone Service, POTS). Each phone set communicates with the R2 device by using one line, and a user may perform a calling or called operation by using any phone set.

The R2 device described in this application includes an R2 PBX (Private Branch Exchange, private branch exchange) and a PCM MUX (PCM multiplex equipment, PCM multiplex equipment). Both the R2 PBX and the PCM MUX are connected to the voice gateway (Voice Gateway, VG) through an uplink El, and are connected to a plurality of phone sets through a plurality of downlink telephone lines. The E1 is one of major communication systems in the plesiochronous digital hierarchy (Plesiochronous Digital Hierarchy, PDH). The E1 system is mainly used in Europe and other countries. R2 signaling is configured on the El, the R2 device and the VG are connected by using an E1 relay, and the R2 signaling is used to perform call interaction between the R2 device and the VG.

The R2 signaling can be classified into line signaling and register signaling based on signaling functions. The line signaling is mainly used to monitor an occupation status, a release status, and a blocking status of a relay line. The register signaling is mainly used to send and request calling and called numbers, and transfer information such as a busy/idle status of calling and called user lines.

A difference between the R2 PBX and the PCM MUX lies in that the R2 PBX device can provide a supplementary service, but the PCM MUX device cannot provide a supplementary service, and therefore, after a switch is withdrawn from the network and migrated, a service function of a user served by the PCM MUX cannot be maintained.

The supplementary service includes, but is not limited to the following services: call hold, calling line identification presentation/restriction, distinctive ringing, a message waiting indicator, call waiting, call transfer, call forwarding, malicious communication identification, a three-party call, a multi-party conference, and the like.

Further, the call waiting service means: for user equipment served by the R2 device, when the user equipment is already on a call, and another call is initiated by using the IMS and the VG, the R2 device provides a call waiting prompt tone to the user equipment, to wait for a feedback of a user, for example, wait for the user equipment to establish a connection to a new call and hold the call that the user equipment is already on without hanging up the call.

The calling line identification presentation service means that the R2 device converts a calling number received by the R2 register signaling into a frequency shift modulation (Frequency Shift Keying, FSK) signal or a dual-tone multi-frequency (Dual-Tone Multi-frequency, DTMF) signal used for calling line identification presentation, and sends the signal to called user equipment.

The distinctive ringing service means that the R2 device provides different ringing tones for called users served by the R2 device based on different calling numbers of calls.

It should be noted that the supplementary services are controlled by the R2 device, and the VG is configured to complete signaling mapping between SIP signaling and an R2 basic call, and senses only the basic call.

Currently, in two commonly used R2 devices, a process of establishing a call between a calling party and a called party is only applicable to a called device that can provide a supplementary service, for example, the R2 PBX device. For an R2 device that cannot provide a supplementary service, for example, the PCM MUX device, service experience of a user served by the R2 device cannot be maintained. In other words, when the PCM MUX device is used as a subscriber line extension device of a local switch, because the PCM MUX device does not have a service processing capability and a capability of playing a dial prompt tone, a ring back tone, and a busy tone, a service function of the device in a PSTN system cannot be maintained, so that user service experience is lost, and service quality and user experience are reduced.

This application provides a method for cooperating, by the VG and the IMS, to provide a supplementary service to a user served by an R2 device, to keep service experience of the user served by the R2 device unchanged when the R2 device that cannot provide the supplementary service is migrated into an IMS network

In the technical solutions of this application, after the R2 device is migrated into the IMS network, the VG and the IMS provide a supplementary service to the user equipment served by the R2 device. The method includes: detecting, by the VG, R2 hookflash signaling; and receiving a user operation to provide hookflash supplementary service experience, where the VG can further provide services to the user served by the R2 device, for example, ringing, announcement playing, and sending of calling line identification presentation information, a message waiting indicator signal, and a polarity reversal signal.

### Embodiment 1

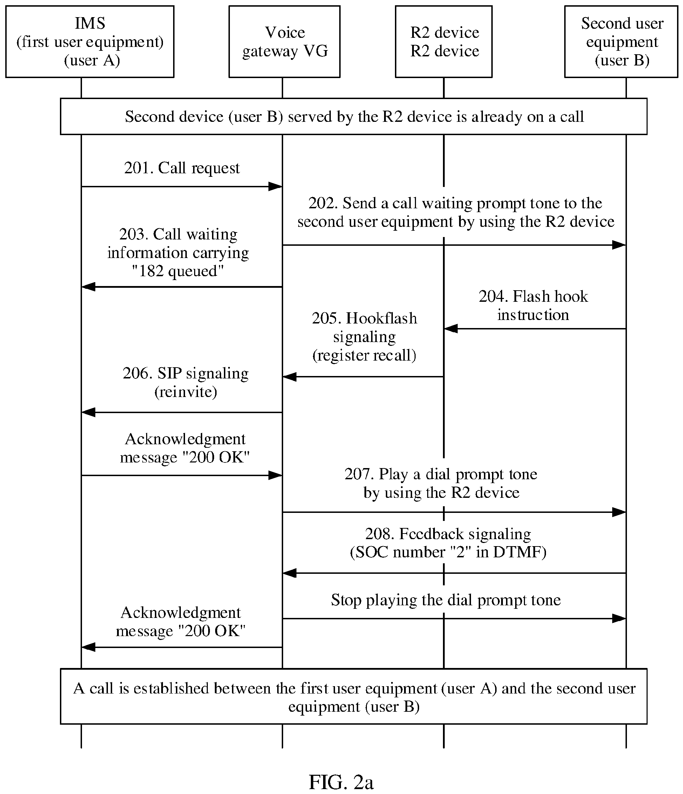

In this embodiment, a VG and an IMS provide a hookflash service to user equipment served by an R2 device, for example, a call waiting service. Specifically, FIG. 2a is a schematic flowchart of a call waiting service according to this embodiment. The figure shows a method for providing a call waiting service to an R2 device that does not have a call waiting service function. Further, the method includes the following steps:

User equipment served by the R2 device is on a call.

Step 201. The VG receives a call request from the IMS, where the call request is initiated by external first user equipment through the IMS, a user corresponding to the first user equipment is a user A, a user corresponding to called second user equipment served by the R2 device is a user B, and the call request is used to request the user A to establish a call with the user B.

Optionally, if the R2 device is an R2 PBX device, the first user equipment and the second user equipment belong to different R2 devices; or if the R2 device is an R2 PCM MUX device, the first user equipment and the second user equipment may belong to a same R2 device.

Step 202. After receiving the call request, the VG detects a status of the second user equipment, and if the status of the second user equipment is busy, the VG triggers a call waiting service, specifically including: the VG sends a call waiting prompt tone to the second user equipment by using the R2 device, where the call waiting prompt tone is used to indicate, to the user B, that there is a call request.

The busy state means that the user B is on a call by using the second user equipment. For example, the user B is on a call with a user C.

Step 203. The VG sends call waiting information carrying "182 Queued" to the IMS. The call waiting information is used to notify the IMS that the second user equipment of the user B is currently in a busy state.

Optionally, the VG further sends a ring back tone to the IMS.

Step 204. When the user B wants to answer a call from the user A, the second network device sends an instruction, for example, a flash hook instruction, to the R2 device, to indicate that the second user equipment needs to perform a hookflash operation.

Step 205. After receiving the instruction, the R2 device sends hookflash signaling to the VG.

The hookflash signaling is register recall R2 signaling, which is R2 line signaling and is used to instruct to perform the hookflash operation. The hookflash operation includes hookflashing a series of hookflash services. Further, the series of hookflash services includes: call hold, call waiting, call transfer, call forwarding, malicious communication identification, a three-party call, a multi-party conference, and the like.

In addition, the hookflash signaling may also be referred to as a hookflash signal, for example, a pulse signal.

Step 206. The VG sends SIP signaling to the IMS. Optionally, the SIP signaling is reinvite (reinvite) signaling, which is used to hold a previous call, to be specific, instruct the IMS to hold a call that the second network device is already on before the first user equipment initiates the call request without hanging up the call.

Optionally, after receiving the SIP signaling, the IMS feeds back an acknowledgment message "200 OK" to the VG.

Step 207. After receiving the hookflash signal from the R2 device, the VG plays a dial prompt tone (play dial prompt tone) to the R2 device, where the dial prompt tone is used to prompt an operation of establishing communication between the second user equipment and the first user equipment. The dial prompt tone includes a series of switch order commands (Switch Order Command, SOC) of different numbers.

Step 208. The VG receives signaling fed back by the second user equipment based on the dial prompt tone.

Step 209. The VG controls and operates a service of the second user equipment based on content of the signaling.

Specifically, in a possible implementation, the dial prompt tone includes a first service number used to prompt to establish a communication connection to the first user equipment. For example, if an SOC number is "2", the acknowledgment message "200 OK" is sent to the IMS, to notify the IMS that a call between the first user equipment and the second user equipment can be established, and at the same time, the VG stops playing the dial prompt tone (stop dial prompt tone). The user A corresponding to the first user equipment in the IMS accepts the call waiting service and thus, the call is established between the user A of the first user equipment and the user B of the second user equipment.

In addition, in a process of performing the hookflash operation by the VG, the IMS holds the call between the user A and the user C.

According to the method provided in this embodiment, through R2 line signaling interworking with the R2 device and SIP signaling interworking with the IMS, the VG completes mapping between the SIP signaling and the R2 signaling and call waiting service processing, to provide the call waiting service to user equipment that does not have a call waiting function and that is served by the R2 device, and ensure that service experience of the user served by the R2 device remains unchanged, and at the same time, hold the call line that the second user equipment is already on without hanging up the call line.

In addition, this embodiment further provides a technical solution for on-hook in a call waiting service. Specifically, in step 209, if the VG detects that the signaling includes a second service number, for example, an SOC number "1", and the second service number is used to prompt the IMS not to connect the call of the first user equipment, the VG generates a second acknowledgment message, and the second acknowledgment message is used to instruct the IMS to hang up the call request of the first user equipment.

After receiving the second acknowledgment message, the IMS hangs up the call from the first user equipment. When the call of the first user equipment is hung up, the VG plays a busy tone to the first user equipment.

It should be noted that, this embodiment only lists a method procedure of a call waiting service in a hookflash service, and a method process of another hookflash service is similar to that in this embodiment. Interworking and mapping between the SIP signaling and the R2 signaling are both implemented by using the VG, to ensure that some services of the R2 device that does not have the supplementary service function are implemented by using the VG, thereby keeping user experience of user equipment served by the R2 device unchanged.

In another possible implementation, the hookflash service further includes a three-party call service, to implement a three-party conference between the user A served by the R2 device and the user B and the user C in the IMS network.

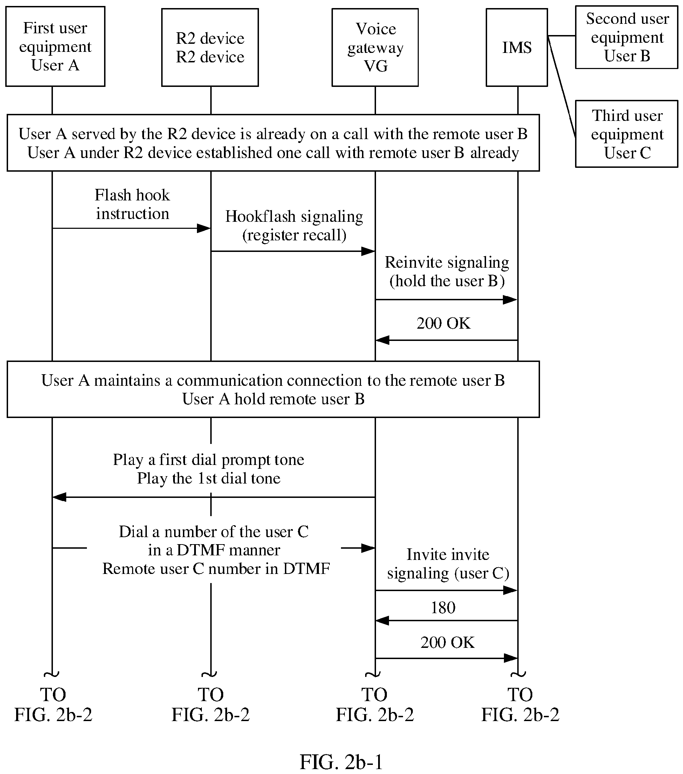

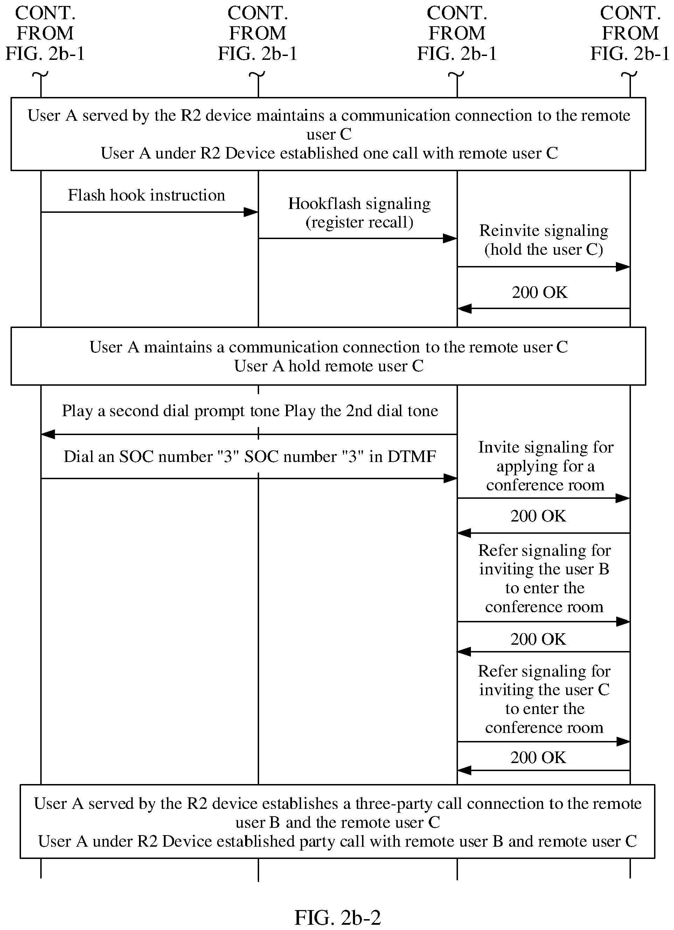

Specifically, FIG. 2b-1 and FIG. 2b-2 are flowcharts of signaling in a three-party call service according to this embodiment. The method includes the following steps:
Step 1. A user A served by an R2 device is on a call with a remote user B.
Step 2. The user A wants to perform a three-party call with the remote user B and a remote user C, and therefore, the user A performs a hookflash operation. The user A first sends flash hook signaling to the R2 device, and after receiving the flash hook signaling of the user A, the R2 device sends hookflash signaling to a VG. The hookflash signaling is a register recall signal, and after detecting the register recall signal of the R2 device, the VG initiates a process of performing call hold on the user B to the IMS. After the call hold is successfully performed on the user B, the IMS replies to the VG with a call hold success response message, for example, 200 OK.
Step 3. The VG plays a first dial prompt tone to the user A, where the first dial prompt tone is used to prompt the user A to dial a number of the user C, and wait for the user A to dial. The user A initiates a call to the remote user C, and dials the number of the user C. After receiving the complete number of the called user C, the VG initiates a procedure of calling the remote user C to the IMS, for example, sending invite user C signaling to the user C. After the remote user C rings, the IMS sends SIP signaling (180) to notify the VG, and after receiving the SIP signaling, the VG plays a ring back tone to the user A. After the remote user C picks up a phone, the IMS sends SIP signaling (200 OK) to notify the VG, and after receiving the SIP signaling, the VG stops playing the ring back tone and a call between the user A and the user C is established.
Step 4. The user A performs hookflash to perform call hold on the user C. The procedure is the same as the procedure of performing call hold on the user B in step 2, and is not described herein again.
Step 5. After receiving, from the IMS, a message that the call hold is successfully performed on the user C (200 OK), the VG plays a second dial prompt tone to the user A. The user A dials an SOC number "3" to initiate a three-party call. After receiving the SOC number of the three-party call, the VG initiates a three-party call process to the IMS: applying to the IMS for a conference room and instructing the IMS to invite the user B and the user C to enter the conference room. And after the foregoing processes are successfully performed, the three-party call between the user A, the user B, and the user C is established.

The three-party call service provided in this embodiment is a hookflash service. In addition, the hookflash service may further include: call transfer, call forwarding, malicious communication identification, and the like. Procedure steps of each service are not listed one by one in this application.

However, a common feature of the hookflash services is as follows: If a user served by an R2 device is already on a call, the user can dial a number to complete a supplementary service through hookflash; and a VG needs to detect hookflash signaling of the user served by the R2 device, play a dial prompt tone to the user, receive the number dialed by the user, and sends and receives SIP signaling of the supplementary service to the IMS based on a signaling procedure requirement of the supplementary service, so that the VG and the IMS can jointly provide the supplementary service to the user.

### Embodiment 2

This embodiment provides another method for providing, by a VG and an IMS, a call waiting service to user equipment served by an R2 device. The method is applied to a technical scenario in which first user equipment in the IMS initiates a call to second user equipment served by the R2 device, and before the call is initiated, the second user equipment is already on a call.

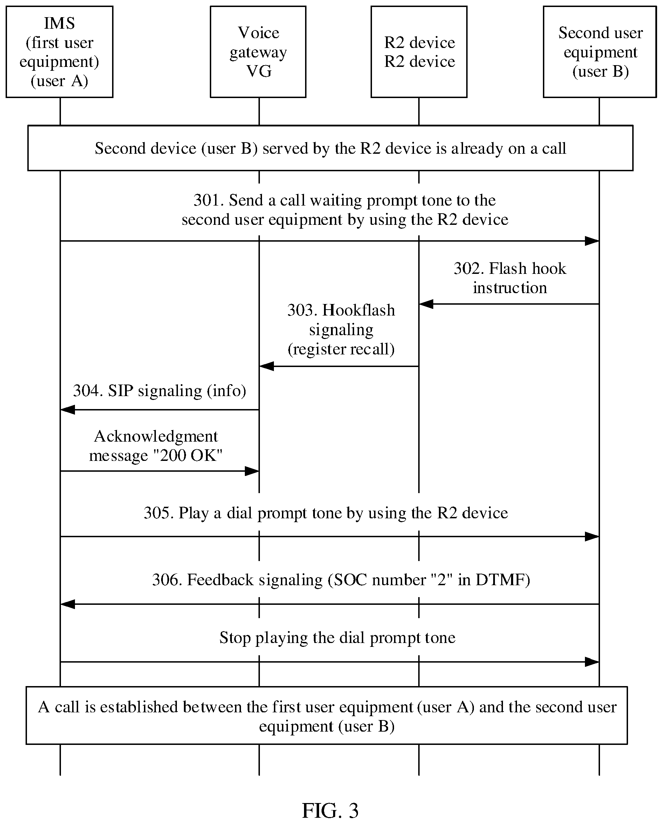

A difference between this embodiment and Embodiment 1 lies in that this embodiment is applicable to some tightly-coupled IMSs. Because a tightly-coupled IMS network has stronger control on services and requires the VG to report signaling in the hookflash, the IMS controls a hookflash service procedure. Specifically, as shown in FIG. 3, the method specifically includes the following steps.

Step 301. After receiving a call request from first user equipment, an IMS sends a call waiting prompt tone to second user equipment through an R2 device, and the call waiting prompt tone is used to indicate, to a user B, that there is a call request.

Step 302. When the user B wants to answer a call from a user A, the second network device sends a flash hook instruction to the R2 device, to indicate that the second user equipment needs to perform a hookflash operation.

Step 303. After receiving the flash hook instruction, the R2 device sends hookflash signaling to the VG.

The hookflash signaling is register recall R2 signaling, which is R2 line signaling and is used to instruct to perform the hookflash operation. The hookflash operation includes hookflashing a series of hookflash services. Further, the series of hookflash services includes: call hold, call waiting, call transfer, call forwarding, malicious communication identification, a three-party call, a multi-party conference, and the like.

Step 304. After receiving the hookflash signaling, the VG sends SIP signaling to the IMS, and the SIP signaling is used to notify the IMS that the user B of the second user equipment has performed the hookflash operation.

Optionally, an info field of the SIP signaling carries hookflash information of the user B.

Optionally, after receiving the SIP signaling, the IMS feeds back an acknowledgment message "200 OK" to the VG.

Step 305. The IMS plays a dial prompt tone to the second user equipment by using the R2 device, and the dial prompt tone is used to prompt an operation of establishing communication between the second user equipment and the first user equipment. The dial prompt tone includes a series of SOCs of different numbers.

Step 306. The IMS receives signaling fed back by the user B based on the dial prompt tone, for example, an SOC service number. At the same time, after receiving the signaling fed back by the user B, the IMS stops playing the dial prompt tone.

Step 307. The IMS controls and operates a service of the second user equipment based on content of the signaling.

In a possible implementation, if the IMS detects that the signaling includes a first service number, for example, an SOC service number "2", the IMS generates a third acknowledgment message. Then, the IMS establishes a communication connection to the first user equipment based on the third acknowledgment message, and at the same time, holds a call line that the second user equipment is already on without hanging up the call line. In this way, the call between the user A and the user B is established, and the call line that the user B is already on before the call is initiated is held without being hung up.

In another possible implementation, if the IMS detects that the signaling includes a second service number, for example, an SOC service number "1", the IMS generates a fourth acknowledgment message. Then, the IMS rejects the call request of the first user equipment based on the fourth acknowledgment message. At the same time, the call with the user B by using the line used to communicate with the user B is continued.

According to the method provided in this embodiment, the VG supports mapping between the R2 signaling and the SIP signaling in the tightly-coupled IMS, the user served by the R2 device is migrated into the tightly-coupled IMS network, and service operation experience of the user served by the R2 device remains unchanged.

In addition, in the foregoing Embodiment 1 and Embodiment 2, the VG further provides an announcement playing service to the user served by the R2 device. The VG can play an announcement for user equipment that does not have an announcement playing capability. For example, when the user served by the R2 device makes an outgoing call, the VG can play a dial prompt tone, a waiting prompt tone, and a ring back tone on a voice channel. After a peer end releases the call, the VG plays a busy tone on the voice channel. Specifically, for a process of playing an announcement by the VG, refer to the steps of playing an announcement by the VG to the R2 device or the second user equipment in Embodiment 1 and Embodiment 2. Details are not described again.

### Embodiment 3

This embodiment describes that a VG provides a distinctive ringing service, and an objective is to provide a distinctive ringing function for user equipment that does not have the distinctive ringing function and that is served by an R2 device, to keep user service experience unchanged.

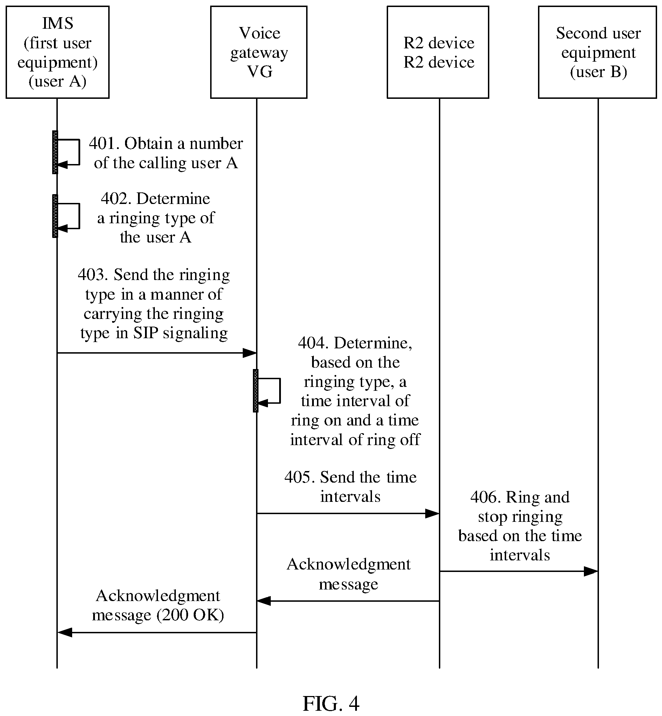

FIG. 4 is a flowchart of signaling in a distinctive ringing service according to this embodiment. Specifically, the following steps are included.

A calling user A initiates a call request to second user equipment of a called user B by using first user equipment.

Step 401. An IMS obtains a number of the calling user A.

Step 402. The IMS determines a ringing type of the user A based on the number of the calling user A.

Optionally, in a method for determining the ringing type, the user B of the called second user equipment presets a correspondence between different user numbers and different ringing types, and sends a relationship table of the correspondence to the IMS. After receiving the number of the calling user A, the IMS first determines whether the relationship table includes the number of the calling user A, and if the relationship table includes the number of the calling user A, the IMS searches for a ringing type corresponding to the number of the calling user A. One ringing type may correspond to one user number, or correspond to a plurality of user numbers. This is not limited in this embodiment.

Step 403. The IMS sends the ringing type to the VG in a manner of carrying the ringing type in SIP signaling. Further, the IMS first configures the ringing type into an alert-info header field of the SIP signaling, and then sends the SIP signaling to the VG.

The VG receives the SIP signaling from the IMS, and obtains the ringing type of the calling user A based on the alert-info header field in the SIP signaling.

Step 404. The VG determines a time interval of ring on (ring on) and a time interval of ring off (ring off) based on the ringing type. Alternatively, the time intervals may be referred to as a break-make ratio.

Specifically, a method for determining the time intervals includes: presetting, by the VG, a correspondence between different ringing types and different time intervals of ring on and different time intervals of ring off. The VG searches for, based on the correspondence, a time interval of ring on and a time interval of ring off that are corresponding to the calling user A.

Step 405. The VG sends the time intervals to an R2 device associated with the called second user.

Step 406. The R2 device receives information that includes the time intervals and that is sent by the VG, and rings and stops ringing based on the time intervals.

Optionally, after receiving the information that includes the time intervals, the R2 device feeds back an acknowledgment message to the VG. After receiving the acknowledgment message from the R2 device, the VG also feeds back an acknowledgment message to the IMS, for example, SIP signaling carrying "200 OK".

According to the method provided in this embodiment, the VG determines, based on the ringing type of the calling party, the time interval of ring on and the time interval of ring off that are corresponding to the calling user, so that different ringing tones can be distinguished, and ringing tones are played based on the preset time intervals, and therefore, the called user can determine a caller based on the time interval of ring on and the time interval of ring off.

In addition, this embodiment further provides a calling line identification presentation service.

Specifically, in the foregoing step 403, the IMS sends the number of the calling user A to the VG by using the SIP signaling, and after determining the time intervals corresponding to the user A, the VG delivers the number of the user A to the R2 device and the called second user equipment

Optionally, the VG and the R2 device preset a voice channel, and the VG sends the number of the calling user A on the voice channel. Further, the VG may send the number of the user A on the voice channel in a manner of a frequency shift modulation (Frequency Shift Keying, FSK) signal or a dual-tone multi-frequency (Dual-Tone Multi-frequency Signaling, DTMF) signal in a time interval after the first ringing tone of the R2 device. After receiving the number of the user A, the R2 device displays the number on the second user equipment corresponding to the called user B, to display the calling line identification presentation function.

In addition, the R2 device may further send other information to the called second user equipment in an FSK or a DTMF manner. A manner and content of sending a message to the second user by the R2 device are not specifically limited in this embodiment.

### Embodiment 4

This embodiment describes that a VG provides a message waiting indicator service to an R2 device, to be specific, the VG provides a service function of turning on and turning off a message waiting indicator for user equipment served by the R2 device. The message waiting indicator service is mainly provided for some R2 devices that do not have the capability of sending message waiting indicator signals.

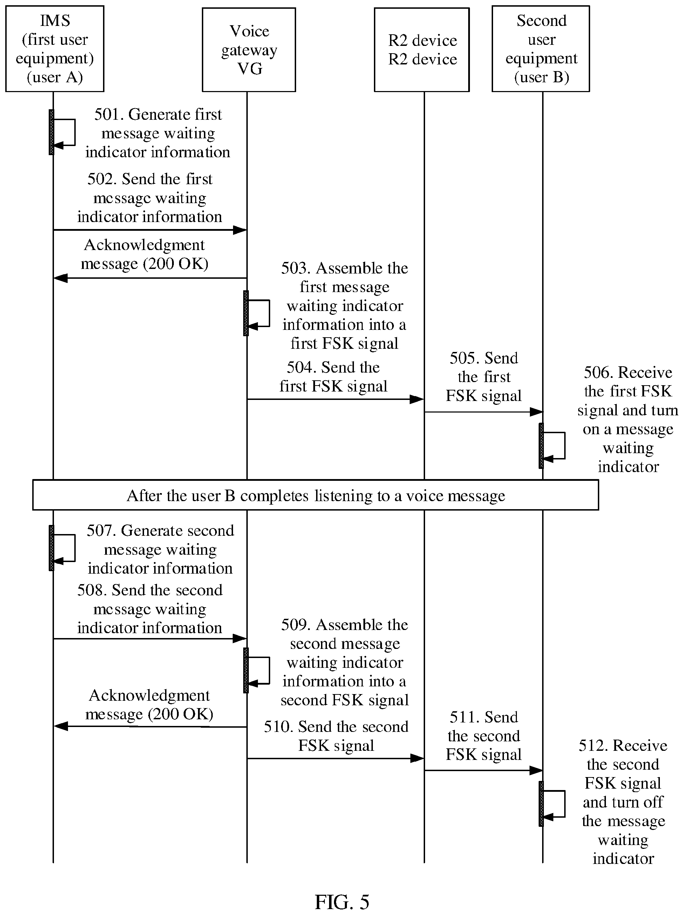

FIG. 5 is a flowchart of signaling in a message waiting indicator service according to this embodiment. First user equipment of a calling user A initiates a call to second user equipment of a called user B, and if the user B does not answer the call, the user A leaves a voice message in a voice mailbox. Based on this prerequisite, the method includes:
Step 501. After obtaining the voice message of the user, an IMS generates first message waiting indicator information, and then sends the first message waiting indicator information to a VG.
Optionally, the IMS configures the first message waiting indicator information in a preset field of SIP signaling, for example, a notify field, and then sends the SIP signaling to the VG.
Step 502. The VG receives the first message waiting indicator information from the IMS.
Specifically, the first message waiting indicator information may further include the following content:

**Table 1**

| Content type | Application/Simple information summary |
|---|---|
| Content length | 23 |
| Message waiting | Yes |

After receiving the first message waiting indicator information, the VG feeds back SIP signaling that carries content "200 OK" to the IMS, and the SIP signaling is used to notify the IMS that the message waiting indicator information is received.
Step 503. The VG assembles the first message waiting indicator information into a first FSK signal based on a requirement of a message waiting indicator signal.
Step 504. The VG sends the first FSK signal to the R2 device on a voice channel established with the R2 device.
Step 505. The R2 device receives the first FSK signal from the VG, and transparently transmits the first FSK signal to the called second user equipment.
Step 506. The second user equipment receives the first FSK signal, and turns on a message waiting indicator.
After the user B completes listening to the voice message left by the user A, the IMS needs to turn off the message waiting indicator of the second user equipment. A process of turning off the message waiting indicator is similar to the foregoing process of turning on the message waiting indicator, and specifically includes:
Step 507. After obtaining that the user B completes listening to the voice message, the IMS generates second message waiting indicator information.
Step 508. The IMS sends the second message waiting indicator information to the VG.
Step 509. The VG assembles the second message waiting indicator information into a second FSK signal based on the requirement of the message waiting indicator signal.
Step 510. The VG sends the second FSK signal to the R2 device on the voice channel.
Step 511. After receiving the second FSK signal from the VG, the R2 device transparently transmits the signal to the called second user equipment.
Step 512. The second user equipment receives the second FSK signal from the R2 device, and turns off the message waiting indicator.

In this embodiment, the VG provides a service of turning on and turning off the message waiting indicator to the user equipment served by the R2 device, to ensure that a message waiting indicator service served by the R2 device remains unchanged during network exit and migration.

In addition, optionally, in this embodiment, when the R2 device delivers the FSK signal, the VG may perform ringing or not perform ringing based on a user requirement. If the ringing is required, operation may be performed according to the method in the foregoing Embodiment 2. This is not described again in this embodiment.

### Embodiment 5

This embodiment describes that a VG provides a polarity reversal indication for user equipment served by an R2 device, to implement a polarity reversal charging service function.

In this embodiment, especially for some R2 devices that are unaware of types of users served by the R2 devices, to be specific, the R2 devices do not know whether the users served by the R2 devices are payphone (payphone) users or common users, the VG can provide polarity reversal signals for the users served by the R2 devices and provide a polarity reversal charging service.

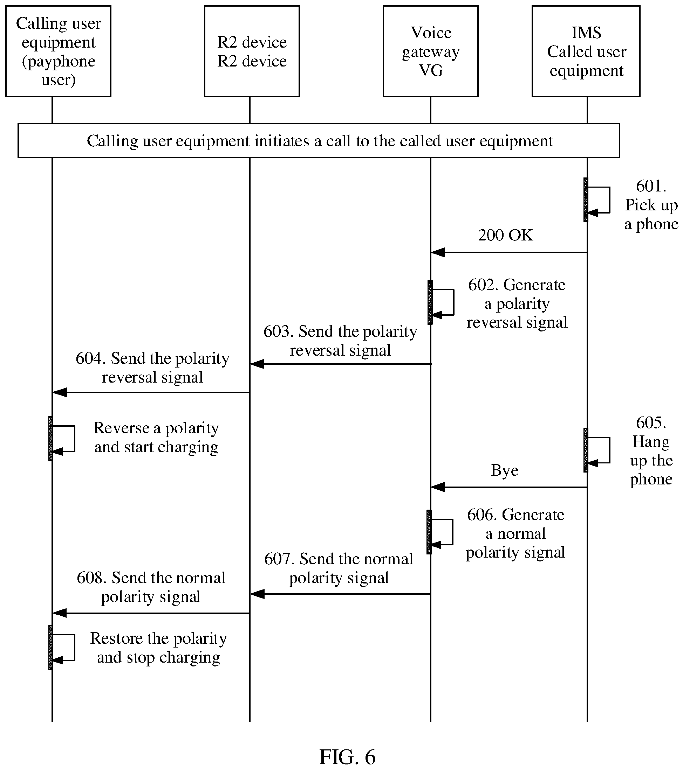

FIG. 6 is a flowchart of signaling in a polarity reversal charging service according to this embodiment. A method for initiating a call to an IMS network by a user served by an R2 device includes the following steps:
Step 601. A called user in the IMS picks up a phone, and sends an SIP instruction, such as "200 OK", to a VG.
Step 602. When receiving the instruction indicating that the called user picks up the phone, the VG generates a polarity reversal signal. The polarity reversal signal is used to instruct calling user equipment served by the R2 device to reverse a polarity and start charging. Further, the polarity reversal signal may be R2 reverse polarity line signaling.
Step 603. The VG sends the polarity reversal signal to the R2 device associated with the calling user.
Step 604. The R2 device receives the polarity reversal signal, and sends the polarity reversal signal to the calling user equipment. After receiving the polarity reversal signal, the calling user equipment reverses the polarity and starts charging.
Step 605. The called user hangs up the phone, and sends an SIP instruction, such as "bye", to the VG.
Step 606. When receiving the instruction indicating that the called user hangs up the phone, the VG generates a normal polarity signal. The normal polarity signal is used to instruct the calling user equipment served by the R2 device to restore the polarity and stop charging. Further, the normal polarity signal may be R2 normal polarity line signaling.
Step 607. The VG sends the normal polarity signal to the R2 device.
Step 608. The R2 device receives the normal polarity signal, and sends the normal polarity signal to the calling user equipment. After receiving the normal polarity signal, the calling user equipment restores the polarity and stops charging.

In step 602, before generating the polarity reversal signal, the VG needs to detect whether the calling user is a payphone user, and if yes, the VG generates the polarity reversal signal; or if not, the VG charges the user as a common user. For example, charging is performed based on a telephone package preset by a calling party or a called party.

According to the method provided in this embodiment, the VG sends the polarity reversal signal to the R2 device, thereby implementing a polarity reversal charging service for the payphone user. And the VG sends the normal polarity signal, thereby implementing a stop charging service for the payphone user. This ensures that a user service function remain unchanged when the R2 device is unaware of a user type.

Corresponding to the foregoing method embodiments, this application further provides an apparatus for connecting user equipment served by an R2 device. The apparatus is configured to implement the methods for connecting user equipment served by an R2 device in the foregoing embodiments. The apparatus may be the VG in any one of the foregoing embodiments, and may be configured to implement method procedures in Embodiment 1 and Embodiment 2.

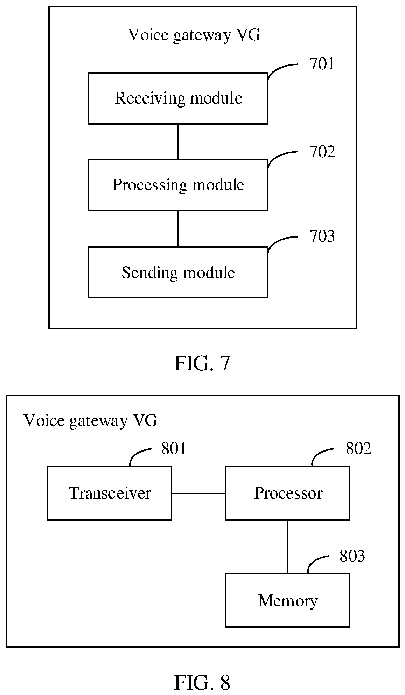

As shown in FIG. 7, the apparatus includes a receiving module 701, a processing module 702, and a sending module 703. In addition, the VG device may further include another function module, for example, a storage module.

Specifically, the receiving module 701 is configured to receive hookflash signaling of second user equipment.

The sending module 703 is configured to: when detecting that the hookflash signaling is received, play a dial prompt tone to an R2 device. The dial prompt tone is used to prompt the second user equipment to establish communication with first user equipment.

The receiving module 701 is further configured to receive signaling fed back by the second user equipment based on the dial prompt tone.

The processing module 702 is configured to control and operate a service of the second user equipment based on content of the signaling.

The sending module 703 is further configured to send SIP signaling of a hookflash service to an IMS based on content of R2 signaling, to supplement, in combination with an IMS, the hookflash service of the second user equipment.

Optionally, in a specific implementation of this embodiment, the dial prompt tone includes a first service number used to prompt to establish a communication connection to the first user equipment.

The processing module 702 is specifically configured to: detect whether the signaling includes the first service number, and if yes, generate a first acknowledgment message, where the first acknowledgment message is used to instruct the IMS to establish a communication connection to the first user equipment.

The sending module 703 is further configured to: send the first acknowledgment message to the IMS, so that the first user equipment in the IMS establishes the communication connection to the second user equipment served by the R2 device, and at the same time, holds a call line that the second user equipment is already on without hanging up the call line.

Optionally, in another specific implementation of this embodiment, the dial prompt tone includes a second service number, and the second service number is used to instruct the second user equipment to hang up a call request of the first user equipment.

The processing module 702 is further configured to: detect whether the R2 signaling includes the second service number, and if yes, generate a second acknowledgment message, where the second acknowledgment message is used to instruct the IMS to hang up the call request of the first user equipment. The sending module 703 is specifically configured to send the second acknowledgment message to the IMS, so that the IMS rejects the call request of the first user equipment. The processing module 702 is further configured to: when the call of the first user equipment is hung up, play a busy tone to the first user equipment.

Optionally, in still another specific implementation of this embodiment, the receiving module 701 is further configured to receive a call request from the IMS, where the call request is initiated by the first user equipment through the IMS and is used to request to establish a call with the second user equipment served by the R2 device.

The processing module 702 is further configured to: after receiving the call request, detect a status of the second user equipment, and if the status of the second user equipment is busy, control the sending module to send a call waiting prompt tone to the second user equipment by using the R2 device, and sending call waiting information and a ring back tone to the IMS.

The hookflash signaling is register recall R2 signaling, and is used to indicate a series of hookflash services. The hookflash services include: call hold, call waiting, call transfer, call forwarding, malicious communication identification, a three-party call service, and the like.

Optionally, in still another specific implementation of this embodiment, the receiving module 701 is specifically configured to receive the hookflash signal from the second network device; the sending module 703 is specifically configured to send reinvite signaling to the IMS, where the reinvite signaling is used to instruct the IMS to hold the call that the second network device is already on without hanging up the call; and the receiving module 701 is specifically further configured to receive a third acknowledgment message fed back by the IMS based on the reinvite signaling.

The hookflash service includes a three-party call service, and the first dial prompt tone is used to prompt the second user equipment to dial a number of third user equipment.

The processing module 702 is further configured to: before receiving the hookflash signaling of the second user equipment, hold the call that the second network device is already on; establish a communication connection to the third user equipment based on the number in the R2 signaling; after establishing the communication connection to the third user equipment, maintain the communication connection between the second user equipment and the third user equipment; and play a second dial prompt tone to the R2 device.

The receiving module 701 is further configured to receive R2 signaling fed back by the second user equipment based on the second dial prompt tone.

The processing module 702 is further configured to: if detecting that the R2 signaling includes a third service number, apply to the IMS for a conference room, and invite two users who maintain communication connections to the second user equipment to enter the conference room, to establish a three-party call connection.

In another embodiment of this application, an apparatus for connecting user equipment served by an R2 device is further provided. The apparatus is configured to perform hookflash on a service of second user equipment served by the R2 device, the second user equipment is already on a call before the hookflash, the R2 device is connected to an IMS by using a VG, and the apparatus may be the IMS or any apparatus in the IMS.

Specifically, the apparatus includes: a receiving module, configured to: receive SIP signaling from the VG, where the signaling is used to notify the IMS that the second user equipment performs a service hookflash operation; and receive an acknowledgment message from the VG; and a processing module, configured to perform a supplementation operation on a hookflash service of the second user equipment based on the acknowledgment message.

Optionally, in a specific implementation of this embodiment, the processing module is specifically configured to: if detecting that the acknowledgment message is a first acknowledgment message, establish a communication connection between first user equipment in the IMS and the second user equipment served by the R2 device, and at the same time, hold a call line that the second user equipment is already on without hanging up the call line; or if detecting that the acknowledgment message is a second acknowledgment message, hang up a call request of the first user equipment.

Optionally, in another specific implementation of this embodiment, the apparatus further includes a sending module. The receiving module is further configured to obtain a call request from a first user, and the call request is used to request the first user equipment to establish a communication connection to the second user equipment. The sending module is configured to send the call request to the VG. The receiving module is further configured to receive call waiting information from the VG.

Corresponding to Embodiment 3 of the foregoing method, this embodiment provides an apparatus embodiment corresponding to the method, which is configured to provide a distinctive ringing service function for a user served by the R2 device.

Specifically, as shown in FIG. 7, the apparatus includes a receiving module 701, a processing module 702, and a sending module 703.

The receiving module 701 is configured to receive SIP signaling from an IMS, and the SIP signaling includes a ringing type of a first user. The processing module 702 is configured to determine, based on the ringing type, a time interval of ring on and a time interval of ring off. The sending module 703 is configured to send the time intervals to an R2 device associated with a called second user, so that the R2 device plays a ring tone based on the time intervals.

In the apparatus, the processing module 702 is configured to: preset a correspondence between different ringing types and different time intervals of ring on and different time intervals of ring off, and determine, based on the ringing type and the correspondence, the time interval of ring on and the time interval of ring off that are corresponding to the ringing type of the first user.

Optionally, in a specific implementation of this embodiment, the SIP signaling further includes a number of the calling first user. The sending module 703 is further configured to send the number of the calling first user to the R2 device on a voice channel.

Optionally, in another specific implementation of this embodiment, the sending module 703 is specifically configured to send the number of the calling first user to the R2 device on the voice channel in an intermittent period of the first ringing tone of ringing and in a manner of a frequency shift modulation FSK signal or a dual-tone multi-frequency DTMF signal.

Another end that exchanges data with the foregoing apparatus, for example, an IMS, includes an apparatus including a receiving module, a processing module, a sending module, and the like. Further, the receiving module is configured to obtain a number of a calling first user; the processing module is configured to determine a ringing type of the first user based on the number of the calling first user; and the sending module is configured to send the ringing type to the VG in a manner of carrying the ringing type in SIP signaling.

Optionally, in the apparatus, the processing module is further configured to configure the ringing type in an alert-info header field of the SIP signaling.

The receiving module is further configured to obtain a correspondence between different numbers and different ringing types. The processing module is further configured to determine the ringing type of the first user based on the number of the calling first user and the correspondence.

Corresponding to Embodiment 4 of the foregoing method, this embodiment provides an apparatus embodiment corresponding to the method, which is configured to provide a message waiting indicator service function for a user served by an R2 device.

Specially, as shown in FIG. 7, in the apparatus, a receiving module 701 is configured to: when a calling first user completes leaving a voice message, receive first message waiting indicator information from an IMS, where the first message waiting indicator information is generated by the IMS after the first user completes leaving the voice message. A processing module 702 is configured to assemble the first message waiting indicator information into a first FSK signal based on a requirement of a message waiting indicator signal. A sending module 703 is configured to send the first FSK signal to the R2 device on a voice channel established with the R2 device, so that the R2 device transparently transmits the first FSK signal to called second user equipment, and turns on a message waiting indicator of the second user equipment.

Optionally, in a specific implementation of this embodiment, the receiving module 701 is specifically configured to receive the first message waiting indicator information sent by the IMS in a manner of carrying the first message waiting indicator information in a preset field of SIP signaling.

Optionally, in a specific implementation of this embodiment, the receiving module 701 is further configured to: when a called second user completes listening to the voice message left by the calling first user, receive second message waiting indicator information from the IMS, where the second message waiting indicator information is generated by the IMS after the second user completes listening to the message.

The processing module 702 is further configured to assemble the second message waiting indicator information into a second FSK signal based on the requirement of the message waiting indicator signal.

The sending module 703 is further configured to send the second FSK signal to the R2 device on the voice channel, so that the R2 device transparently transmits the second FSK signal to the called second user equipment, and turns off the message waiting indicator of the second user equipment.

Corresponding to Embodiment 5 of the foregoing method, this embodiment provides an apparatus embodiment corresponding to the method, which is configured to provide a polarity reversal indication for a user served by an R2 device, to implement a polarity reversal charging service function.

Specifically, in an apparatus structure shown in FIG. 7, a processing module 702 is configured to generate a polarity reversal signal when receiving an instruction indicating that the called user picks up a phone; and a sending module 703 is configured to send the polarity reversal signal to the R2 device associated with the calling user, where the polarity reversal signal is used to instruct calling user equipment served by the R2 device to reverse a polarity and start charging; the processing module 702 is further configured to generate a normal polarity signal when receiving an instruction indicating that the called user hangs up the phone; and the sending module 703 is configured to send the normal polarity signal to the R2 device, where the normal polarity signal is used to instruct the calling user equipment served by the R2 device to restore a polarity and stop charging.

The processing module 702 is specifically configured to: detect whether the calling user is a payphone user; and if yes, generate the polarity reversal signal.

FIG. 8 is a schematic structural diagram of a VG device according to an embodiment of this application. The VG device may be the VG in any of the foregoing embodiments, and may be configured to implement method steps in the foregoing embodiments.

As shown in FIG. 8, the VG device may include a transceiver 801, a processor 802, and a memory 803. The VG device may further include more or fewer components, or combine some components, or have different component arrangements. This is not limited in this application.

The transceiver 801 is configured to establish a communication connection to a device such as an R2 device or an IMS, to implement mapping between R2 signaling and SIP signaling and data transmission. The transceiver 801 may include an E1 module and an IP communications module, and is configured to complete communication between an E1 signal and an IP packet.

In different implementations of this application, various transceiver modules in the transceiver 801 usually appear in a form of an integrated circuit chip (Integrated Circuit Chip), and may be selectively combined. For example, after downlink information of a network device is received, the downlink information is sent to the processor for processing, and designed uplink data is sent to the network device.

In this embodiment, a function implemented by the transceiver 801 may be implemented by the receiving module 701 and the sending module 703 of the VG, or may be implemented by the transceiver 801 controlled by the processor 802. A function implemented by the processing module 702 may be implemented by the processor 802.

As a control center of the VG device, the processor 802 is connected to various parts of the entire VG device by using various interfaces and lines, and performs various functions and/or data processing of the VG device by running or executing a software program and/or a module stored in the memory 803 and invoking data stored in the memory 803.

The processor 802 may include an integrated circuit (Integrated Circuit, IC), for example, may include a single packaged IC, or may be formed by connecting a plurality of packaged ICs with a same function or different functions. For example, the processor may include only a central processing unit (Central Processing Unit, CPU), or may be a combination of a GPU, a digital signal processor (Digital Signal Processor, DSP), and a control chip (such as a baseband chip) in the transceiver. In various implementations of this application, the CPU may be a single computing core, or may include a plurality of computing cores.

The memory 803 may include a volatile memory (volatile memory), for example, a random access memory (Random Access Memory, RAM); or may include a non-volatile memory (non-volatile memory), for example, a flash memory (flash memory), a hard disk drive (Hard Disk Drive, HDD), or a solid-state drive (Solid-State Drive, SSD); or the memory may include a combination of the foregoing types of memories. The memory may store a program or code. The processor 802 in the VG device executes the program or the code to implement functions of the network device.

In specific implementation, this application further provides a computer storage medium, where the computer storage medium may store a program, and when the program is executed, some or all of the steps of the embodiments of the method for connecting user equipment served by an R2 device that is provided in this application may be included.

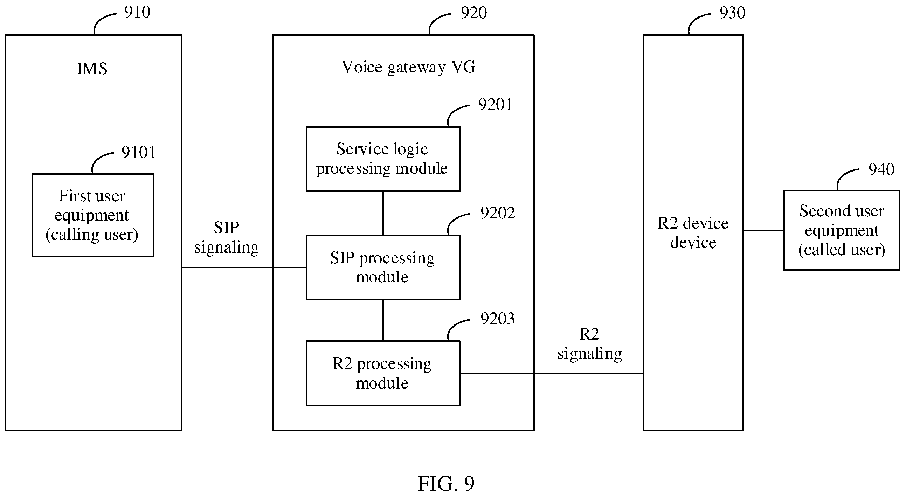

In another specific embodiment of this application, as shown in FIG. 9, a VG 920 may be divided based on service functions, and may include: a service logic processing module 9201, an SIP processing module 9202, and an R2 processing module 9203.

The service logic processing module 9201 is configured to trigger, based on hookflash signaling and an SOC number, a hookflash supplementary service procedure, including service functions such as a call waiting service, instructing to play a call waiting prompt tone, connecting or rejecting a new call based on a received SOC number.

The SIP processing module 9202 is used to exchange data with an IMS, including adding hookflash event processing, adding ringing based on a call status, sending polarity reversal signaling, presenting calling line identification, sending a message waiting indicator signal, and the like. In addition, the SIP processing module 9202 is further configured to complete SIP signaling sending and receiving, call status processing, and the like.

The R2 processing module 9203 is configured to exchange data with an R2 device, including: adding hookflash line signaling detection, adding ringing, and sending polarity reversal line signaling. In addition, the R2 processing module 9203 is further configured to complete R2 signaling sending and receiving, and call status processing.

In addition, referring to FIG. 9, a system including an IMS network further includes: an IMS 910, an R2 device 930, and second user equipment 940 associated with the R2 device 930.

The IMS 910 may include first user equipment 9101, configured to: obtain a call request of a calling user, initiate paging to a called user, and implement SIP signaling interworking between the IMS and the VG.

The R2 device 930 is configured to implement communication with the IMS network through the VG 920, to be specific, establish a communication connection between the calling user and the called user through the VG. The R2 device 930 communicates with the VG 920 by using R2 signaling. The R2 device is associated with at least one user equipment, for example, the second user equipment 940.

The user equipment (including the first user equipment in the IMS and the second user equipment served by the R2 device) may be a terminal, for example, a device such as a personal communication service (Personal Communication Service, PCS) phone or a cordless phone. The terminal may also be a remote terminal (Remote Terminal, RT), an access terminal (Access Terminal, AT), a user terminal (User Terminal, UT), a user agent (User Agent, UA), a user device, or user equipment (User Equipment, UE).

The VG 920 and the IMS 910 are configured to provide a supplementary service to a user served by the R2 device, and the VG 920 completes call mapping between the SIP signaling and the R2 signaling and service processing under various supplementary services, not only mapping of basic call signaling. The supplementary service includes, but is not limited to: calling line identification presentation/restriction, distinctive ringing, a message waiting indicator, call hold, call waiting, call transfer, call forwarding, malicious communication identification, a three-party call, a multi-party conference, polarity reversal charging, and the like.

According to the method and the apparatus that are provided in the embodiments of this application, for the R2 device that cannot provide the supplementary service, after the local switch is withdrawn from the network, the user equipment served by the R2 device can still be connected to the IMS network by using a VG hookflash supplementary service, to keep service experience of a user served by the R2 device unchanged. At the same time, after the VG connects the R2 device to the IMS network, the R2 device can also share a new service specific to the IMS network.

In addition, it should be noted that, the technical solutions of the foregoing embodiments may be used by an operator to connect an R2 device, or may be used on an enterprise IP PBX device to connect an R2 device.

A person skilled in the art may clearly understand that, the technologies in the embodiments of the present invention may be implemented by software in addition to a necessary general hardware platform. Based on such an understanding, the technical solutions in the embodiments of the present invention essentially, or the part contributing to the prior art may be implemented in a form of a software product. The software product may be stored in a storage medium, such as an ROM/RAM, a magnetic disk, or an optical disc, and includes several instructions for instructing a computer device (which may be a personal computer, a server, or a network device) to perform the methods described in the embodiments or some parts of the embodiments of the present invention.

For same or similar parts in the embodiments in this specification, refer to each other. Particularly, the embodiments of the apparatusfor connecting user equipment served by an R2 device is basically similar to the method embodiments, and therefore are described briefly. For related parts, refer to descriptions in the method embodiments.

The foregoing descriptions are implementations of this application, but are not intended to limit the protection scope of this application.

## Claims

1. A method for connecting user equipment served by an R2 device, wherein the method is used to perform hookflash on a service of second user equipment served by the R2 device, the second user equipment is already on a call before the hookflash, the R2 device is connected to an IP multimedia subsystem IMS by using a voice gateway VG, and
the method comprises:
when detecting that hookflash signaling of the second user equipment is received, playing, by the VG, a first dial prompt tone to the R2 device;
receiving, by the VG, R2 signaling fed back by the second user equipment based on the first dial prompt tone; and
sending, by the VG, SIP signaling of a hookflash service to the IMS based on content of the R2 signaling, to supplement, in combination with the IMS, the hookflash service of the second user equipment.

2. The method according to claim 1, wherein the hookflash service comprises a call waiting service,
the first dial prompt tone comprises a first service number, the first service number is used to prompt the second user equipment to establish a communication connection to first user equipment in the IMS, and
the sending, by the VG, SIP signaling of a hookflash service to the IMS based on content of the R2 signaling comprises:
if detecting that the R2 signaling comprises the first service number, generating, by the VG, a first acknowledgment message, wherein the first acknowledgment message is used to instruct the IMS to establish a communication connection to the first user equipment; and
sending, by the VG, the first acknowledgment message to the IMS, so that the first user equipment in the IMS establishes the communication connection to the second user equipment served by the R2 device, and at the same time, holds the call that the second user equipment is already on.

3. The method according to claim 1 or 2, wherein a second dial prompt tone comprises a second service number, the second service number is used to instruct the second user equipment to reject a call request of the first user equipment, and
the sending, by the VG, SIP signaling of a hookflash service to the IMS based on content of the R2 signaling comprises:
if detecting that the R2 signaling comprises the second service number, generating, by the VG, a second acknowledgment message, wherein the second acknowledgment message is used to instruct the IMS to hang up the call request of the first user equipment;
sending, by the VG, the second acknowledgment message to the IMS, so that the IMS rejects the call request of the first user equipment; and
when a call of the first user equipment is hung up, playing, by the VG, a busy tone to the first user equipment.

4. The method according to any one of claims 1 to 3, wherein before the playing, by the VG, a first dial prompt tone to the R2 device, the method further comprises:
receiving, by the VG, a call request from the IMS, wherein the call request is initiated by the first user equipment through the IMS and is used to request to establish a call with the second user equipment served by the R2 device; and
after receiving the call request, detecting, by the VG, a status of the second user equipment, and if the status of the second user equipment is busy, sending a call waiting prompt tone to the second user equipment by using the R2 device, and sending call waiting information and a ring back tone to the IMS.

5. The method according to any one of claims 1 to 4, wherein the hookflash signaling is used to indicate a series of hookflash services; and
the hookflash services comprise: call hold, call waiting, call transfer, call forwarding, malicious communication identification, and a three-party call service.

6. The method according to any one of claims 1 to 5, wherein the detecting, by the VG, that hookflash signaling of the second user equipment is received comprises:
receiving, by the VG, the hookflash signaling from the second user equipment;
sending, by the VG, reinvite signaling to the IMS, wherein the reinvite signaling is used to instruct the IMS to hold the call that the second network device is already on without hanging up the call; and
receiving, by the VG, a third acknowledgment message fed back by the IMS based on the reinvite signaling.

7. The method according to claim 1, wherein the hookflash service comprises a three-party call service, and the first dial prompt tone is used to prompt the second user equipment to dial a number of third user equipment;
before the VG receives the hookflash signaling of the second user equipment, the method further comprises: holding, by the VG, the call that the second network device is already on; and
the sending, by the VG, SIP signaling of a hookflash service to the IMS based on content of the R2 signaling comprises:
establishing, by the VG, a communication connection to the third user equipment based on the number in the R2 signaling;
after establishing the communication connection to the third user equipment, maintaining, by the VG, the communication connection between the second user equipment and the third user equipment;
playing, by the VG, a second dial prompt tone to the R2 device;
receiving, by the VG, R2 signaling fed back by the second user equipment based on the second dial prompt tone; and
if the R2 signaling comprises a third service number, applying, by the VG, to the IMS for a conference room, and inviting two users who maintain communication connections to the second user equipment to enter the conference room, to establish a three-party call connection.

8. A method for connecting user equipment served by an R2 device, wherein the method is used to perform hookflash on a service of second user equipment served by the R2 device, the second user equipment is already on a call before the hookflash, the R2 device is connected to an IMS by using a VG, and the method comprises:
receiving, by the IMS, SIP signaling from the VG, wherein the signaling is used to notify the IMS that the second user equipment performs a service hookflash operation;
receiving, by the IMS, an acknowledgment message from the VG; and
performing, by the IMS, a supplementation operation on a hookflash service of the second user equipment based on the acknowledgment message.

9. The method according to claim 8, wherein the performing, by the IMS, a supplementation operation on a hookflash service of the second user equipment based on the acknowledgment message comprises:
if the acknowledgment message is a first acknowledgment message, establishing a communication connection between first user equipment in the IMS and the second user equipment served by the R2 device, and at the same time, holding the call that the second user equipment is already on; or
if the acknowledgment message is a second acknowledgment message, hanging up a call request of the first user equipment.

10. The method according to claim 8 or 9, wherein before the receiving, by the IMS, SIP signaling from the VG, the method further comprises:
obtaining, by the IMS, a call request from a first user, wherein the call request is used to request the first user equipment to establish a communication connection to the second user equipment;
sending, by the IMS, the call request to the VG; and
receiving, by the IMS, call waiting information from the VG.

11. A method for connecting user equipment served by an R2 device, wherein the method comprises:
receiving, by a VG, SIP signaling from an IMS, wherein the SIP signaling comprises a ringing type of a first user;
determining, by the VG based on the ringing type, a time interval of ring on and a time interval of ring off; and
sending, by the VG, the time intervals to an R2 device associated with a called second user, so that the R2 device plays a ring tone based on the time intervals.

12. The method according to claim 11, wherein the method further comprises:
presetting, by the VG, a correspondence between different ringing types and different time intervals of ring on and different time intervals of ring off; and
the determining, by the VG based on the ringing type, a time interval of ring on and a time interval of ring off comprises:
determining, by the VG based on the ringing type and the correspondence, the time interval of ring on and the time interval of ring off that are corresponding to the ringing type of the first user.

13. The method according to claim 11 or 12, wherein the SIP signaling further comprises a number of the calling first user; and
the method further comprises:
sending, by the VG, the number of the calling first user to the R2 device on a voice channel.

14. The method according to claim 13, wherein the sending, by the VG, the number of the calling first user to the R2 device on a voice channel comprises:
sending, by the VG, the number of the calling first user to the R2 device on the voice channel in an intermittent period of the first ringing tone of ringing and in a manner of a frequency shift modulation FSK signal or a dual-tone multi-frequency DTMF signal.

15. A method for connecting user equipment served by an R2 device, wherein the method comprises:
obtaining, by an IMS, a number of a calling first user;
determining, by the IMS, a ringing type of the first user based on the number of the calling first user; and
sending, by the IMS, the ringing type to a VG in a manner of carrying the ringing type in SIP signaling.

16. The method according to claim 15, wherein before the IMS sends the SIP signaling to the VG, the method further comprises:
configuring, by the IMS, the ringing type into a header field of the SIP signaling.

17. The method according to claim 15 or 16, wherein the method further comprises:
obtaining, by the IMS, a correspondence between different numbers and different ringing types; and
the determining, by the IMS, a ringing type of the first user based on the number of the calling first user comprises:
determining, by the IMS, the ringing type of the first user based on the number of the calling first user and the correspondence.

18. A method for connecting user equipment served by an R2 device, wherein the method comprises:
when a calling first user completes leaving a voice message, receiving, by a VG, first message waiting indicator information from an IMS, wherein the first message waiting indicator information is generated by the IMS after the first user completes leaving the voice message;
assembling, by the VG, the first message waiting indicator information into a first FSK signal based on a requirement of a message waiting indicator signal; and
sending, by the VG, the first FSK signal to the R2 device on a voice channel established with the R2 device, so that the R2 device transparently transmits the first FSK signal to called second user equipment, and turns on a message waiting indicator of the second user equipment.

19. The method according to claim 18, wherein the receiving, by a VG, first message waiting indicator information from an IMS comprises:
receiving, by the VG, the first message waiting indicator information sent by the IMS in a manner of carrying the first message waiting indicator information in a preset field of SIP signaling.

20. The method according to claim 18 or 19, wherein the method further comprises:
when a called second user completes listening to the voice message left by the calling first user, receiving, by the VG, second message waiting indicator information from the IMS, wherein the second message waiting indicator information is generated by the IMS after the second user completes listening to the voice message;
assembling, by the VG, the second message waiting indicator information into a second FSK signal based on the requirement of the message waiting indicator signal; and
sending, by the VG, the second FSK signal to the R2 device on the voice channel, so that the R2 device transparently transmits the second FSK signal to the called second user equipment, and turns off the message waiting indicator of the second user equipment.

21. A method for connecting user equipment served by an R2 device, wherein the method is used for a calling user to initiate a call to a called user, and the method comprises:
generating, by a VG, a polarity reversal signal when receiving an instruction indicating that the called user picks up a phone;
sending, by the VG, the polarity reversal signal to the R2 device associated with the calling user, wherein the polarity reversal signal is used to instruct calling user equipment served by the R2 device to reverse a polarity and start charging;
generating, by a VG, a normal polarity signal when receiving an instruction indicating that the called user hangs up the phone; and
sending, by the VG, the normal polarity signal to the R2 device, wherein the normal polarity signal is used to instruct the calling user equipment served by the R2 device to restore the polarity and stop charging.

22. The method according to claim 19, wherein the generating a polarity reversal signal comprises:
detecting, by the VG, whether the calling user is a payphone user; and
if yes, generating the polarity reversal signal.

23. An apparatus for connecting user equipment served by an R2 device, wherein the apparatus is configured to perform hookflash on a service of second user equipment served by the R2 device, the second user equipment is already on a call before the hookflash, the R2 device is connected to an IP multimedia subsystem IMS by using a voice gateway VG, and the apparatus comprises:
a receiving module, configured to receive hookflash signaling of the second user equipment; and
a sending module, configured to: when detecting that the hookflash signaling is received, play a first dial prompt tone to the R2 device; wherein
the receiving module is further configured to receive R2 signaling fed back by the second user equipment based on the first dial prompt tone; and
the sending module is further configured to send SIP signaling of a hookflash service to the IMS based on content of the R2 signaling, to supplement, in combination with the IMS, the hookflash service of the second user equipment.

24. The apparatus according to claim 23, wherein the hookflash service comprises a call waiting service, the first dial prompt tone comprises a first service number, the first service number is used to prompt the second user equipment to establish a communication connection to first user equipment in the IMS, and
the apparatus further comprises a processing module, wherein
the processing module is configured to: detect whether the R2 signaling comprises the first service number, and if the R2 signaling comprises the first service number, generate a first acknowledgment message, wherein the first acknowledgment message is used to instruct the IMS to establish a communication connection to the first user equipment; and
the sending module is specifically configured to send the first acknowledgment message to the IMS, so that the first user equipment in the IMS establishes the communication connection to the second user equipment served by the R2 device, and at the same time, holds the call that the second user equipment is already on.

25. The apparatus according to claim 23 or 24, wherein a second dial prompt tone comprises a second service number, and the second service number is used to instruct the second user equipment to hang up a call request of the first user equipment;
the processing module is further configured to: detect whether the R2 signaling comprises the second service number, and if the R2 signaling comprises the second service number, generate a second acknowledgment message, wherein the second acknowledgment message is used to instruct the IMS to hang up the call request of the first user equipment;
the sending module is specifically configured to send the second acknowledgment message to the IMS, so that the IMS rejects the call request of the first user equipment; and
the processing module is further configured to: when a call of the first user equipment is hung up, play a busy tone to the first user equipment.

26. The apparatus according to any one of claims 23 to 25, wherein
the receiving module is further configured to receive a call request from the IMS, wherein the call request is initiated by the first user equipment through the IMS and is used to request to establish a call with the second user equipment served by the R2 device; and
the processing module is further configured to: after receiving the call request, detect a status of the second user equipment, and if the status of the second user equipment is busy, control the sending module to send a call waiting prompt tone to the second user equipment by using the R2 device, and send call waiting information and a ring back tone to the IMS.

27. The apparatus according to any one of claims 23 to 26, wherein the hookflash signaling is used to indicate a series of hookflash services; and
the hookflash services comprise: call hold, call waiting, call transfer, call forwarding, malicious communication identification, and a three-party call service.

28. The apparatus according to any one of claims 23 to 27, wherein
the receiving module is specifically configured to receive the hookflash signal from the second network device;
the sending module is specifically configured to send reinvite signaling to the IMS, wherein the reinvite signaling is used to instruct the IMS to hold the call that the second network device is already on without hanging up the call; and
the receiving module is specifically further configured to receive a third acknowledgment message fed back by the IMS based on the reinvite signaling.

29. The apparatus according to claim 23, wherein the hookflash service comprises a three-party call service, and the first dial prompt tone is used to prompt the second user equipment to dial a number of third user equipment;
the processing module is further configured to: before receiving the hookflash signaling of the second user equipment, hold the call that the second network device is already on; establish a communication connection to the third user equipment based on the number in the R2 signaling; after establishing the communication connection to the third user equipment, maintain the communication connection between the second user equipment and the third user equipment; and play a second dial prompt tone to the R2 device;
the receiving module is further configured to receive R2 signaling fed back by the second user equipment based on the second dial prompt tone; and
the processing module is further configured to: if detecting that the R2 signaling comprises a third service number, apply to the IMS for a conference room, and invite two users who maintain communication connections to the second user equipment to enter the conference room, to establish a three-party call connection.

30. An apparatus for connecting user equipment served by an R2 device, wherein the apparatus is configured to perform hookflash on a service of second user equipment served by the R2 device, the second user equipment is already on a call before the hookflash, the R2 device is connected to an IMS by using a VG, and the apparatus comprises:
a receiving module, configured to: receive SIP signaling from the VG, wherein the signaling is used to notify the IMS that the second user equipment performs a service hookflash operation; and receive an acknowledgment message from the VG; and
a processing module, configured to perform a supplementation operation on a hookflash service of the second user equipment based on the acknowledgment message.

31. The apparatus according to claim 30, wherein
the processing module is specifically configured to: if detecting that the acknowledgment message is a first acknowledgment message, establish a communication connection between first user equipment in the IMS and the second user equipment served by the R2 device, and at the same time, hold the call that the second user equipment is already on; or if detecting that the acknowledgment message is a second acknowledgment message, hang up a call request of the first user equipment.

32. The apparatus according to claim 30 or 31, wherein the apparatus further comprises a sending module,
the receiving module is further configured to obtain a call request from a first user, wherein the call request is used to request the first user equipment to establish a communication connection to the second user equipment;
the sending module is configured to send the call request to the VG; and
the receiving module is further configured to receive call waiting information from the VG.

33. An apparatus for connecting user equipment served by an R2 device, wherein the apparatus comprises:
a receiving module, configured to receive SIP signaling from an IMS, wherein the SIP signaling comprises a ringing type of a first user;
a processing module, configured to determine, based on the ringing type, a time interval of ring on and a time interval of ring off; and
a sending module, configured to send the time intervals to an R2 device associated with a called second user, so that the R2 device plays a ring tone based on the time intervals.

34. The apparatus according to claim 33, wherein
the processing module is further configured to: preset a correspondence between different ringing types and different time intervals of ring on and different time intervals of ring off, and determine, based on the ringing type and the correspondence, the time interval of ring on and the time interval of ring off that are corresponding to the ringing type of the first user.

35. The apparatus according to claim 33 or 34, wherein the SIP signaling further comprises a number of the calling first user; and
the sending module is further configured to send the number of the calling first user to the R2 device on a voice channel.

36. The apparatus according to claim 35, wherein
the sending module is specifically configured to send the number of the calling first user to the R2 device on the voice channel in an intermittent period of the first ringing tone of ringing and in a manner of a frequency shift modulation FSK signal or a dual-tone multi-frequency DTMF signal.

37. An apparatus for connecting user equipment served by an R2 device, wherein the apparatus comprises:
a receiving module, configured to obtain a number of a calling first user;
a processing module, configured to determine a ringing type of the first user based on the number of the calling first user; and
a sending module, configured to send the ringing type to the VG in a manner of carrying the ringing type in SIP signaling.

38. The apparatus according to claim 37, wherein
the processing module is further configured to configure the ringing type into a header field of the SIP signaling.

39. The apparatus according to claim 37 or 38, wherein
the receiving module is further configured to obtain a correspondence between different numbers and different ringing types; and
The processing module is further configured to determine the ringing type of the first user based on the number of the calling first user and the correspondence.

40. An apparatus for connecting user equipment served by an R2 device, wherein the apparatus comprises:
a receiving module, configured to: when a calling first user completes leaving a voice message, receive first message waiting indicator information from an IMS, wherein the first message waiting indicator information is generated by the IMS after the first user completes leaving the voice message;
a processing module, configured to assemble the first message waiting indicator information into a first FSK signal based on a requirement of a message waiting indicator signal; and
a sending module, configured to send the first FSK signal to the R2 device on a voice channel established with the R2 device, so that the R2 device transparently transmits the first FSK signal to called second user equipment, and turns on a message waiting indicator of the second user equipment.

41. The apparatus according to claim 40, wherein
the receiving module is specifically configured to receive the first message waiting indicator information sent by the IMS in a manner of carrying the first message waiting indicator information in a preset field of SIP signaling.

42. The apparatus according to claim 40 or 41, wherein
the receiving module is further configured to: when a called second user completes listening to the voice message left by the calling first user, receive second message waiting indicator information from the IMS, wherein the second message waiting indicator information is generated by the IMS after the second user completes listening to the voice message;
the processing module is further configured to assemble the second message waiting indicator information into a second FSK signal based on the requirement of the message waiting indicator signal; and
the sending module is further configured to send the second FSK signal to the R2 device on the voice channel, so that the R2 device transparently transmits the second FSK signal to the called second user equipment, and turns off the message waiting indicator of the second user equipment.

43. An apparatus for connecting user equipment served by an R2 device, wherein the method is used for a calling user to initiate a call to a called user, and the apparatus comprises:
a processing module, configured to generate a polarity reversal signal when receiving an instruction indicating that the called user picks up a phone; and
a sending module, configured to send the polarity reversal signal to the R2 device associated with the calling user, wherein the polarity reversal signal is used to instruct calling user equipment served by the R2 device to reverse a polarity and start charging; wherein
the processing module is further configured to generate a normal polarity signal when receiving an instruction indicating that the called user hangs up the phone; and
the sending module is configured to send the normal polarity signal to the R2 device, wherein the normal polarity signal is used to instruct the calling user equipment served by the R2 device to restore the polarity and stop charging.

44. The apparatus according to claim 43, wherein
the processing module is specifically configured to: detect whether the calling user is a payphone user; and if yes, generate the polarity reversal signal.
